# EUROPEAN PATENT APPLICATION

(11) **EP 4 792 922 A1**
(43) Date of publication of application: **19.08.2026**
(21) Application number: 24897501.3
(22) Date of filing: 25.11.2024
(51) Int. Cl.: B01F 35/30, B01F 27/701, B01F 33/70, B01F 35/45, B01J 3/00, B01J 3/03, B29B 7/10, B29B 7/22, F16J 15/18, B01F 101/06

(54) **KNEADER**

(30) Priority: 28.11.2023 JP 2023200905
(71) Applicant: KABUSHIKI KAISHA KOBE SEIKO SHO (KOBE STEEL, LTD.), Hyogo 651-8585 (JP)
(72) Inventor: KAWASAKI, Ryota, Kobe-shi, Hyogo 651-2271 (JP); HIGASHI, Kosuke, Kobe-shi, Hyogo 651-2271 (JP)
(74) Representative: TBK
(86) International application number: PCT/JP2024/041684
(87) International publication number: WO 2025/115816

(57) **Abstract**

Provided is a kneader (1) that inhibits the physical properties of a kneaded material from being deteriorated, having a high sealing performance for a shaft part of a rotor. The kneader (1) includes a chamber (2) defining a kneading space (15), a rotor (3) including a first rotor shaft part (12) and a second rotor shaft part (13), a first bearing unit (4) that rotatably supports the first rotor shaft part (12), a second bearing unit (5) that rotatably supports the second rotor shaft part (13), and a sealing member (6a, 6b) that prevents a working fluid from leaking at a position closer to a motor than the chamber (2). At least one of the first bearing units (4) and the second bearing units (5) is constituted by a non-lubrication bearing.

## Description

### Technical Field

The present invention relates to a kneader for kneading a material in presence of a working fluid in a supercritical state or a subcritical state.

### Background Art

Patent Literature 1 discloses a kneader including a kneading rotor and a pair of bearing units to knead a material. The bearing unit rotatably supports axially opposite end parts of the kneading rotor. For each of the pair of bearing units is used a lubricating oil composed of a resource other than petroleum.

There is a case where the above-described kneading is performed in presence of a working fluid in a supercritical or subcritical state. The kneader to be used in this case is required to include a chamber with high airtightness. In particular, high sealing performance is required for the shaft part of the kneading rotor.

Besides, in the kneader of Patent Document 1, there is a risk that the lubricating oil composed of a resource other than petroleum is mixed into the material to deteriorate the physical properties of the kneaded product.

### Citation List

### Patent Literature

Patent Literature 1: Japanese Unexamined Patent Publication No. 2009-234077

### Summary of Invention

It is an object of the present invention to provide a kneader capable of inhibiting physical properties of a kneaded product from being deteriorated and having high sealing performance for a shaft part of a rotor.

Provided is a kneader that performs kneading of a material in presence of a working fluid in a supercritical state or a subcritical state, the kneader including a chamber, a rotor, a first bearing unit, a second bearing unit, and a sealing member. The chamber defines a kneading space in which kneading of the material is performed. The rotor includes a first rotor shaft part, a rotor body, and a second rotor shaft part, which are aligned in a rotor axis direction. The first rotor shaft part is one end part in the rotor axis direction to be connected to a motor. The second rotor shaft part is the other end part in the rotor axis direction. The rotor body is located between the first rotor shaft part and the second rotor shaft part and rotated in the kneading space to thereby perform the kneading. The first bearing unit rotatably supports the first rotor shaft. The second bearing unit rotatably supports the second rotor shaft. The sealing member is disposed so as to prevent the working fluid from leaking from the chamber toward the motor, at a position closer to the motor than the chamber. At least one of the first bearing unit and the second bearing unit is constituted by a non-lubrication bearing containing no lubricating oil.

### Brief Description of Drawings

FIG. 1 is a flow sheet showing a kneading apparatus according to each embodiment of the present invention.
FIG. 2 is a cross-sectional view of the kneader according to the first embodiment of the present invention.
FIG. 3 is a cross-sectional view of a kneader according to a modification of the first embodiment.
FIG. 4 is a cross-sectional view of a kneader according to a second embodiment of the present invention.
FIG. 5 is a cross-sectional view of a kneader according to a third embodiment of the present invention.

### Detailed Description

Hereinafter, there will be described preferred embodiments of the present invention with reference to the drawings.

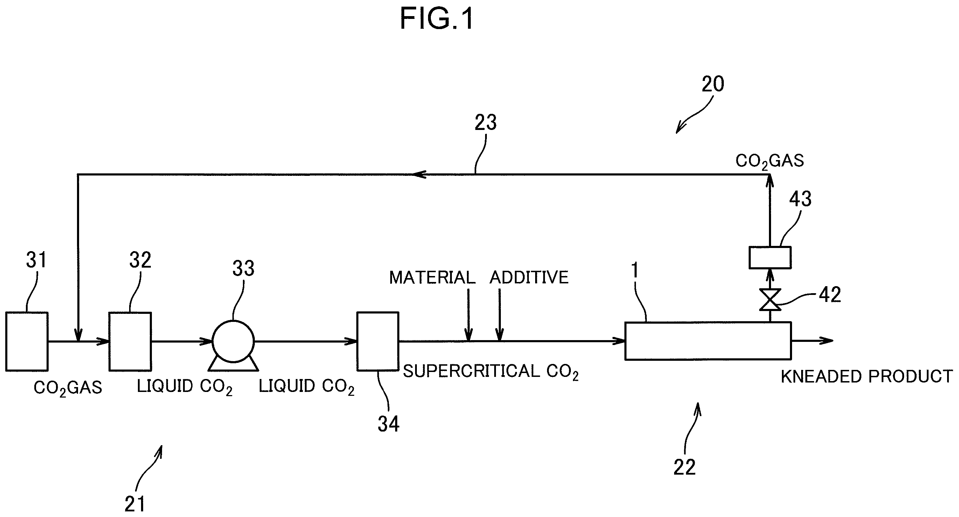

FIG. 1 shows a kneading apparatus 20 including a kneader 1 according to a first embodiment of the present invention. The kneader 1 performs kneading of a material in presence of a working fluid in a supercritical state or a subcritical state. The material in each embodiment is rubber, but may be a resin, a food, or the like. The kneading apparatus 20 performs the kneading in a batch manner.

The supercritical state is a state with the temperature equal to or higher than the critical temperature Tc of the working fluid and the pressure equal to or higher than the critical pressure Pc of the working fluid. The subcritical state is a state close to the supercritical state. Examples of conditions of the temperature T and the pressure P in the subcritical state are shown below. The unit of each of the temperature T and the critical temperature Tc in each example is Celsius. [Condition Example 1] The temperature T is equal to or higher than the critical temperature Tc and the pressure P is lower than the critical pressure Pc (T ≥ Tc and P < Pc). [Condition Example 2] The temperature T is lower than the critical temperature Tc and the pressure P is lower than the critical pressure Pc (T < Tc, P < Pc); the temperature T is sufficiently higher than the normal temperature; and the pressure P is sufficiently higher than the normal pressure (atmospheric pressure). [Condition Example 3] The ratio of the temperature T to the critical temperature Tc is greater than 0.5 and less than 1.0 (0.5 < T/Tc < 1.0), and the ratio of the pressure P to the critical pressure Pc is less than 0.5 (0.5 < P / Pc). [Condition Example 4] The ratio of the temperature T to the critical temperature Tc is less than 0.5 (0.5 < T/Tc), and the ratio of the pressure P to the critical pressure Pc is greater than 0.5 and less than 1.0 (0.5 < P/Pc < 1.0). [Condition Example 5] With the critical temperature Tc equal to or lower than 0°C, the ratio of the pressure P to the critical pressure Pc is less than 0.5 (0.5 < P/Pc).

Examples of substances constituting the working fluid include carbon dioxide, nitrogen, hydrogen, xenon, ethane, ammonia, methanol, and water. Among these, suitable for rubber kneading are carbon dioxide and nitrogen.

In the present embodiment, carbon dioxide (CO₂) is used as a working fluid, and kneading is performed in presence of carbon dioxide in a supercritical state (supercritical CO₂). The kneader according to the present invention is also adaptable to kneading in presence of another working fluid in a supercritical state or in presence of a working fluid in a subcritical state.

The kneading apparatus 20 includes a production section 21 and a kneading section 22.

The production section 21 produces supercritical CO₂. The production section 21 includes a tank 31, a first heat exchanger 32, a pump 33, and a second heat exchanger 34.

In the tank 31 is stored CO₂ gas. The first heat exchanger 32 cools the CO₂ gas supplied from the tank 31 into liquid CO₂ in the liquid state.

The pump 33 pressurizes the liquid CO₂. The power of the pump 33 required for pressurizing the liquid CO₂ is smaller than the power of the pump 33 required for pressurizing the CO₂ gas. The pump 33 forcibly feeds the pressurized liquid CO₂ to the downstream side.

The second heat exchanger 34 heats the pressurized liquid CO₂ in a container to vaporize the liquid CO₂ into supercritical CO₂.

The kneading section 22 performs kneading of the material in presence of supercritical CO₂. The kneading section 22 includes the kneader 1, a regulation valve 42, and a separation filter 43.

In the flow path interconnecting the production section 21 and the kneading section 22, a material and an additive are added to supercritical CO₂. Supercritical CO₂ and the materials and additives added thereto are introduced into the kneader 1.

The kneader 1 kneads the material and the additive in presence of supercritical CO₂ inside the kneader 1. The material and the additive are allowed to be rapidly kneaded by the dissolution thereof in supercritical CO₂.

In the case of the material being a polymer material such as rubber or resin, the additive is an addition agent, a kneaded rubber, a plant-derived material containing cellulose nanofibers or the like. In the case where the material is a food product, the additive is a food additive or the like. The addition of the additive is optional.

The completion of the kneading in the kneader 1 involves the separation of the supercritical CO₂ and the kneaded product of the material and the additive in the kneader 1. The kneaded product and supercritical CO₂ are separately discharged from the kneader 1. The regulation valve 42 adjusts the flow rate of the supercritical CO₂ that is discharged from the inside of the kneader 1. In the present embodiment, the regulation valve 42 decompresses the supercritical CO₂ discharged from the kneader 1 into CO₂ gas. The separation filter 43 separates the additive remaining in the CO₂ gas from the CO₂ gas.

The kneading apparatus 20 further includes a return flow path 23. The return flow path 23 allows the CO₂ gas having been separated from the kneaded product generated by the kneading of the material to flow in the return flow path 23, guiding the CO₂ gas to the upstream side of the first heat exchanger 32. Specifically, the return flow path 23 has an upstream end and a downstream end, wherein the upstream end is connected to the separation filter 43 of the kneading section 22 and the downstream end is connected to a flow path interconnecting the tank 31 and the first heat exchanger 32.

The return flow path 23 allows the CO₂ gas having been separated from the kneaded product in the kneading section 22 to be returned to the production section 21 through the return flow path 23, thereby allowing the CO₂ gas having been separated from the kneaded product to be reused.

The overall configuration of the kneading apparatus 20 shown in FIG. 1 is shared by the second embodiment and subsequent embodiments described later. The specific configuration of the kneading apparatus including the kneader according to the present invention, however, is not limited to that shown in FIG. 1.

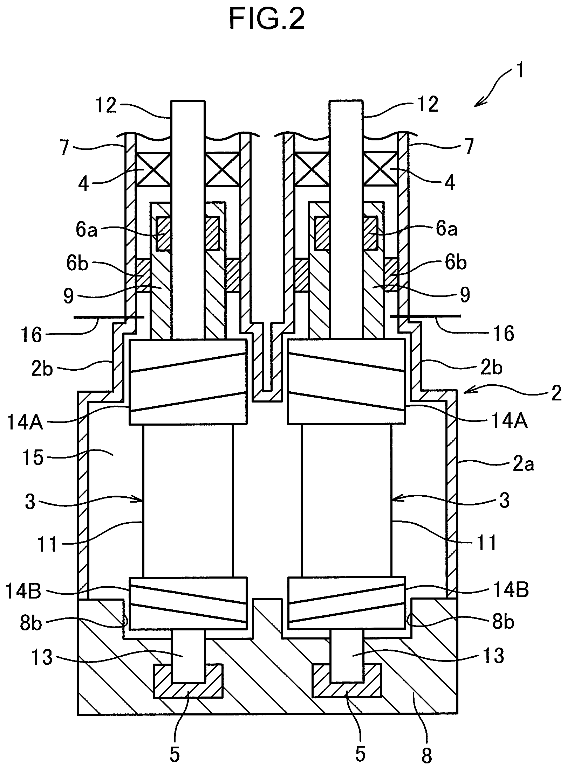

As shown in FIG. 2, the kneader 1 according to the first embodiment includes a chamber 2, a pair of rotors 3, a pair of lubrication bearings 4, a pair of non-lubrication bearings 5, a pair of first sealing members 6a, a pair of second sealing members 6b, and a pair of bearing support parts 7.

The chamber 2 defines a kneading space 15, in which kneading of the material is performed. The kneader 1 further includes a pair of supply-and-discharge ports 16 for providing communication between the kneading space 15 and the outside of the kneader 1. In the present embodiment, the pair of supply-and-discharge ports 16 are fixed to respective parts in the vicinity of respective boundaries between the chamber 2 and the pair of bearing support parts 7, which will be described in detail later. The supply-and-discharge port 16 allows supercritical CO₂ to be supplied into the kneading space 15 through the supply-and-discharge port 16. Besides, the supply-and-discharge port 16 allows the supercritical CO₂ in the kneading space 15 to be discharged to the outside of the chamber 2 through the supply-and-discharge port 16.

The chamber 2 includes a chamber body 2a, a pair of screw portion housing parts 2b, and a lid member 8. The chamber body 2a includes a side wall which is substantially cylindrical to enclose the kneading space 15 and an end wall partially closing one end of opposite ends in the rotor axis direction, and the end wall is formed with a pair of through-holes to allow the pair of rotors 3 to pass through the end wall, respectively. The rotor axis direction is a direction parallel to the pair of rotors 3, being a vertical direction on the paper surface of FIG. 2. The pair of screw portion housing parts 2b are arranged in a direction orthogonal to the rotor axis direction, and joined to the end wall of the chamber body 2a so as to communicate with the kneading space 15 through the pair of through holes. The other end of opposite ends of the chamber body 2a in the rotor axis direction, namely, the lower end in FIG. 2, is opened over the entire area to form an opening that allows the kneading space 15 to be opened through the opening, and the lid member 8 is detachably attached to the chamber body 2a so as to close the opening.

The pair of bearing support parts 7 have respective cylindrical shapes, joined to the pair of screw portion housing parts 2b of the chamber 2, respectively, so as to extend from the pair of screw portion housing parts 2b to a side opposite to the lid member 8. In other words, the lid member 8 is attached to the chamber body 2a on the side opposite to the pair of bearing support parts 7 across the chamber body 2a.

The pair of rotors 3 are rotatably supported by the lid member 8 of the chamber 2 and the pair of bearing support parts 7 while extending in the rotor axis direction in a posture of being parallel to each other. The material in the kneading space 15 is kneaded in presence of supercritical CO₂ by respective rotations of the pair of rotors 3.

Each of the pair of rotors 3 includes a rotor body 11, a first rotor shaft 12, a second rotor shaft 13, a first screw portion 14A, and a second screw portion 14B, which are aligned on a straight line extending in the rotor axis direction. The rotor body 11 is disposed in the kneading space 15. The rotor body 11 has a not-graphically-shown spiral tooth. The tooth has a shape to allow the material to be kneaded by the rotation of the rotor body 11 in the kneading space 15.

The first rotor shaft 12 and the second rotor shaft 13 are located on both sides of the rotor body 11 as to the rotor axis direction, respectively. The first rotor shaft 12 is one end part of the rotor 3 in the rotor axis direction, and the second rotor shaft 13 is the other end part of the rotor 3 in the rotor axis direction. Each of the first and second rotor shafts 12, 13 extends in the rotor axis direction. The first rotor shaft 12 is rotatably supported by the bearing support part 7 via the lubrication bearing 4. The second rotor shaft 13 is rotatably supported by the chamber 2, specifically, the lid member 8, via the non-lubrication bearing 5. To the end part of the first rotor shaft 12 is connected a not-graphically-shown motor for rotating the rotor 3.

The first screw portion 14A is interposed between the rotor body 11 and the first rotor shaft 12 and housed in the corresponding screw portion housing part 2b out of the pair of screw portion housing parts 2b with an appropriate gap therebetween. The second screw portion 14B is interposed between the rotor body 11 and the second rotor shaft 13, and a part of the second screw portion 14B is housed in a screw portion housing recess 8b formed on the inner surface of the lid member 8 with an appropriate gap. Each of the first and second screw portions 14 has an outer peripheral surface formed with a screw. The spiral direction of the screw of the first screw portion 14A is a direction allowing the first screw portion 14A to push back the kneaded material, which tends to be moved toward the first rotor shaft 12 by the rotation of the rotor 3, toward the rotor body 11. The spiral direction of the screw of the second screw portion 14B is reverse to the direction of the spiral of the screw of the first screw portion 14A, being a direction allowing the second screw portion 14B to push back the kneaded material, which tends to be moved toward the second rotor shaft 13 by the rotation of the rotor 3, toward the rotor body 11. Hence, the first screw portion 14A is capable of preventing the kneaded material from being moved to the lubrication bearing 4, and the second screw portion 14B is capable of preventing the kneaded material from being moved to the non-lubrication bearing 5.

The lubrication bearing 4, which is a bearing lubricated with a lubricating oil, constitutes a first bearing unit that rotatably supports the first rotor shaft 12. Specifically, the lubrication bearing 4 rotatably supports the first rotor shaft 12 while being disposed inside the bearing support part 7 to be supported by the bearing support part 7. The lubrication bearing 4 is, for example, a rolling bearing.

The non-lubrication bearing 5, which is a bearing containing no lubricating oil, that is, a bearing that is not lubricated by a lubricating oil, constitutes a second bearing unit that rotatably supports the second rotor shaft 13. The non-lubrication bearing 5 rotatably supports an end part of the second rotor shaft 13 while being disposed in the interior of the lid member 8 to be held by the lid member 8. Hence, the second rotor shaft 13 is restrained in the interior of the lid member 8 without penetrating the lid member 8. The non-lubrication bearing 5 is, for example, a metal bush.

The kneader 1 according to the present embodiment further includes a pair of protection members 9. Each of the pair of protection members 9 has a cylindrical shape, disposed around the first rotor shaft 12 so as to cover the outer peripheral surface of the first rotor shaft 12 over the entire circumference at a position closer to the rotor body 11 than the lubrication bearing 4. In short, the protection member 9 is interposed between the outer peripheral surface of the first rotor shaft 12 and the inner peripheral surface of each of the pair of bearing support parts 7. The protection member 9 is rotatable together with the first rotor shaft 12 along with the rotation of the rotor 3. On the other hand, the first rotor shaft 12 is configured to be separable from a part adjacent to the first rotor shaft 12 in the rotor 3, the part being the first screw portion 14A in the present embodiment, the separation allowing the protection member 9 to be extracted from a space between the bearing support part 7 and the first rotor shaft 12 to the inside of the chamber 2 in the rotor axis direction and allowing the protection member 9 to be inserted into the space between the bearing support part 7 and the first rotor shaft 12 from the chamber 2 in the rotor axis direction.

The pair of first sealing members 6a and the pair of second sealing members 6b are disposed inside the pair of bearing support parts 7, respectively, and configured to prevent (restrain) fluid from leaking through a gap in the bearing support part 7. The first and second sealing members 6a and 6b, thus, prevent working fluid from leaking from the chamber 2 toward the motor, that is, in a direction from the second rotor shaft 13 toward the first rotor shaft 12, at a position closer to the motor than the chamber 2. Besides, the first and second sealing members 6a and 6b prevent fluid (for example, lubricating oil) from leaking from a side closer to the motor than the sealing members 6a and 6b toward the chamber 2. The first and second sealing members 6a and 6b are disposed in the bearing support part 7 at a position closer to the chamber 2 than the lubrication bearing 4, that is, a position between the lubrication bearing 4 and the chamber 2.

The first sealing member 6a has an annular shape, interposed between the outer peripheral surface of the first rotor shaft 12 and the inner peripheral surface of the sliding member 9. The first sealing member 6a is, for example, a single-pressure spring built-in seal. The first sealing member 6a is fitted into an annular groove formed in the inner peripheral surface of the protection member 9. The kneader 1 may include a plurality of first sealing members 6a aligned in the rotor axis direction.

The second sealing member 6b has an annular shape, interposed between the outer peripheral surface of the protection member 9 and the inner peripheral surface of the bearing support part 7. The second sealing member 6b is, for example, an O-ring. The second sealing member 6b is fitted into an annular groove formed in the outer peripheral surface of the protection member 9.

The outer peripheral surface of the protection member 9 makes contact with the second sealing member 6b in place of the outer peripheral surface of the first rotor shaft 12, thereby protecting the outer peripheral surface of the first rotor shaft 12. The rotation of the rotor 3 has a possibility of involving the rotational slide of the outer peripheral surface of the protection member 9 against the second sealing member 6b, which slide may promote wear damage on the outer peripheral surface of the protection member 9 to deteriorate the sealing performance of the second sealing member 6; however, the protection member 9 can be removed from the first rotor shaft 12 and replaced with a new protection member 9. This allows the frequency of replacement of the first rotor shaft 12 to be significantly reduced as compared with a case of the contact of the outer peripheral surface of the first rotor shaft 12 with the second sealing member 6b.

The second sealing member 6b is disposed at a position opposite to the chamber 2 across the supply-and-discharge port 16 in the rotor axis direction. Specifically, the second sealing member 6b is disposed between the supply-and-discharge port 15 and the lubrication bearing 4. The kneader 1 may include a plurality of second sealing members 6b aligned in the rotor axis direction.

The first and second sealing members 6a and 6b, disposed between the lubrication bearing 4 lubricated by a lubricating oil and the chamber 2, restrain the lubricating oil from leaking into the kneading space 15 of the chamber 2, thereby inhibiting the lubricating oil from deteriorating the physical properties of the kneaded material. Besides, the first and second sealing members 6a and 6b can be easily replaced in a state where the protection member 9 has been extracted from the space between the bearing support part 7 and the first rotor shaft 12.

On the other hand, the non-lubrication bearing 5 serving as the second bearing and containing no lubricating oil eliminates the necessity of any sealing member interposed between the non-lubrication bearing 5 and the chamber 2. This allows the number of components of the kneader 1 including the sealing member to be reduced. Besides, the use of the non-lubrication bearing 5 inhibits the lubricating oil from deteriorating the physical properties of the kneaded material in the kneading space 15.

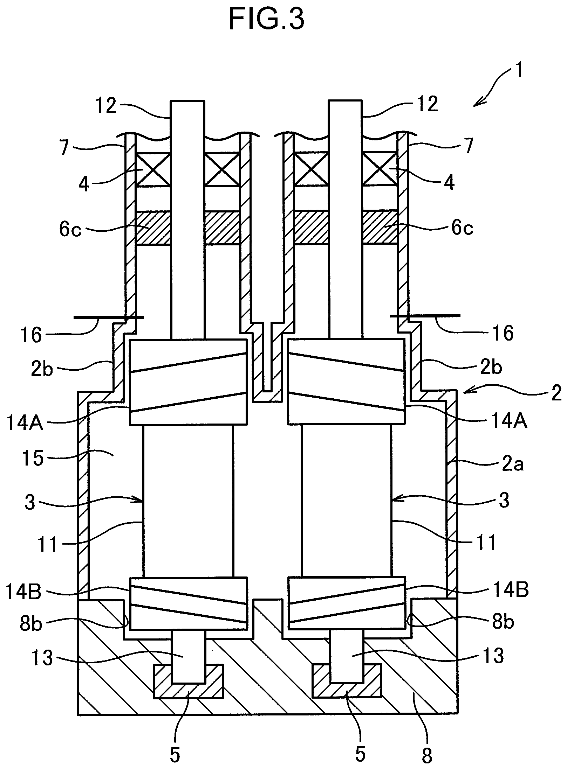

FIG. 3 shows a modification of the kneader 1 according to the first embodiment. In the modification, the protection member 9 shown in FIG. 2 is omitted in each of the pair of bearing support parts 7. Besides, in place of the first and second sealing members 6a and 6b shown in FIG. 2 is disposed only a single annular third sealing member 6c. The third sealing member 6c makes close contact with each of the outer peripheral surface of the first rotor shaft 12 and the inner peripheral surface of the bearing support part 7 at a position between the supply-and-discharge port 15 and the lubrication bearing 4. Similarly to the first and second sealing members 6a and 6b, the third sealing member 6c is also capable of sealing between the chamber 2 and the lubrication bearing 4. The kneader 1 may, alternatively, include a plurality of third sealing members 6c aligned in the rotor axis direction between the supply-and-discharge port 15 and the first bearing 4.

The kneader 1 having been described, wherein each of the first and second sealing members 6a and 6b shown in FIG. 2 and the third sealing member 6c shown in FIG. 3 is disposed so as to prevent working fluid from leaking from the chamber 2 to the motor at a position between the chamber 2 and the motor, enables the sealing performance around the first rotor shaft 12 to be improved. Although the first rotor shaft 12 has to be disposed so as to penetrate through a member for accommodating working fluid, the member being the bearing support part 7 in the kneader 1 shown in FIGS. 2 and 3, in a position between the chamber 2 and the motor in order to be connected to the motor, each of the first and second sealing members 6a, 6b and the third sealing member 6c can effectively restrain the working fluid from leaking from the chamber 2 to the motor between the first rotor shaft 12 and the bearing support part 7.

Besides, the non-lubrication bearing 5 constituting the second bearing unit with no lubricating oil enables physical properties of the kneaded material to be inhibited from being deteriorated. Although the lubricating oil may deteriorate the physical properties of the kneaded product when mixed into the kneaded product, the second bearing unit constituted by the non-lubrication bearing 5 reduces the possibility of the mixing of the lubricating oil into the kneaded product, thereby inhibiting the physical properties of the kneaded product from being deteriorated.

Besides, the non-lubrication bearing capable of having a simpler structure than a lubrication bearing such as a rolling bearing allows the kneader 1 to have a simple configuration, for example, as compared with a case where each of the first bearing unit and the second bearing unit includes a lubrication bearing. This allows, for example, the maintenance of the kneader 1 to be easily performed.

On the other hand, the chamber 2 includes the chamber body 2a and the lid member 8, wherein the chamber body 2a has an opening that allows the inside of the kneading space 15 to be opened through the opening at an end part on a side close to the second rotor shaft 13 in the rotor axis direction, and the lid member 8 is detachably attached to the chamber body 2a so as to close the opening, thereby allowing maintenance to be easily performed through the opening. In addition, the non-lubrication bearing 5 as the second bearing is disposed in the interior of the lid member 8 and supports the end part of the second rotor shaft 13, thereby enabling the second rotor shaft 13 to be supported without penetrating the lid member 8. This eliminates the necessity of disposing a sealing member around the second rotor shaft 13 to prevent working fluid from leaking from the chamber 2, thereby allowing the number of components of the entire kneader 1 including the sealing member to be reduced. The kneader 1 is, thus, allowed to have a simple structure, thereby allowing maintenance of the kneader 1 to be performed more easily. Besides, the unnecessity of any sealing member between the non-lubrication bearing 5 and the chamber 2 allows the distance between the lubrication bearing 4 constituting the first bearing unit and the non-lubrication bearing 5 constituting the second bearing unit to be small, thereby enabling the rotor 3 to be restrained from eccentricity. This allows seizure or the like of the bearing due to the eccentricity of the rotor 3 to be reduced.

On the other hand, each of the first and second sealing members 6a, 6b shown in FIG. 2 and the third sealing member 6c shown in FIG. 3 is arranged so as to prevent fluid from leaking from the motor to the chamber 2, between the lubrication bearing 4 and the chamber 2, thereby allowed to inhibit lubricating oil from leaking from the lubrication bearing 4 into the kneading space 15 of the chamber 2. This restrains the lubricating oil from being mixed into the kneaded product, inhibiting the lubricating oil from deteriorating the physical properties of the kneaded product.

Besides, since a typical lubrication bearing is capable of having a longer life than a non-lubrication bearing, the first bearing unit constituted by the lubrication bearing 4 causes a possibility of reducing the frequency of maintenance work for the first bearing unit.

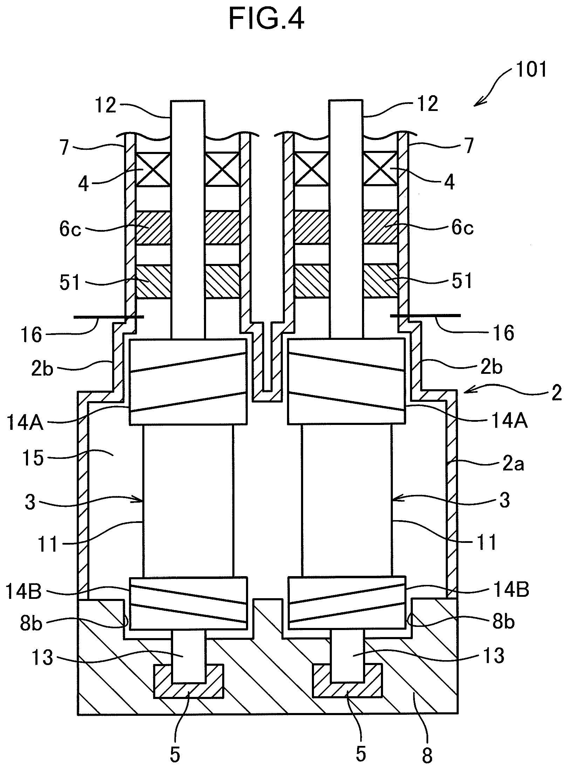

FIG. 4 shows a kneader 101 according to a second embodiment of the present invention. The kneader 101 includes a non-lubrication bearing 51 in addition to the components of the kneader 1 shown in FIG. 3. The non-lubrication bearing 51 is disposed inside a bearing support part 7 together with a lubrication bearing 4 to constitute a first bearing unit. Specifically, the non-lubrication bearing 51 rotatably supports a first rotor shaft 12 at a position between a third sealing member 6c and a chamber 2 in the bearing support part 7 in association with the lubrication bearing 4. The non-lubrication bearing 51 is, therefore, located between the chamber 2 and the lubrication bearing 4. The non-lubrication bearing 51 is located between a supply-and-discharge port 15 and the lubrication bearing 4 in the rotor axis direction.

Similarly to the kneader 1 shown in FIG. 3, the kneader 101 does not include the protection member 9 shown in FIG. 2, and the sealing member in each bearing support part 7 is only the annular third sealing member 6c. The third sealing member 6c is located between the lubrication bearing 4 and the non-lubrication bearing 51 in the rotor axis direction. The kneader 101 may, alternatively, include a plurality of third sealing members 6c aligned in the rotor axis direction between the lubrication bearing 4 and the non-lubrication bearing 51.

The non-lubrication bearing 51, which is disposed at a position closer to the chamber 2 than the lubrication bearing 4 to constitute the first bearing unit that rotatably supports the first rotor shaft 12 together with the lubrication bearing 4, can restrain the rotor 3 from eccentricity to thereby reduce seizure or the like of the bearing due to the eccentricity. Besides, located closer to the chamber 2 than the third sealing member 6c, the non-lubrication bearing 51 allows the distance between the non-lubrication bearing 51 and the second bearing part (the non-lubrication bearing 5 in FIG. 4) to be small, thereby allowing the rotor 3 to be more effectively restrained from the eccentricity. Moreover, the non-lubrication bearing 51 containing no lubricating oil can inhibit the physical properties of the kneaded material in the kneading space 15 of the chamber 2 from being deteriorated by a lubricating oil even though the non-lubrication bearing 51 is located closer to the chamber 2 than the third sealing member 6c.

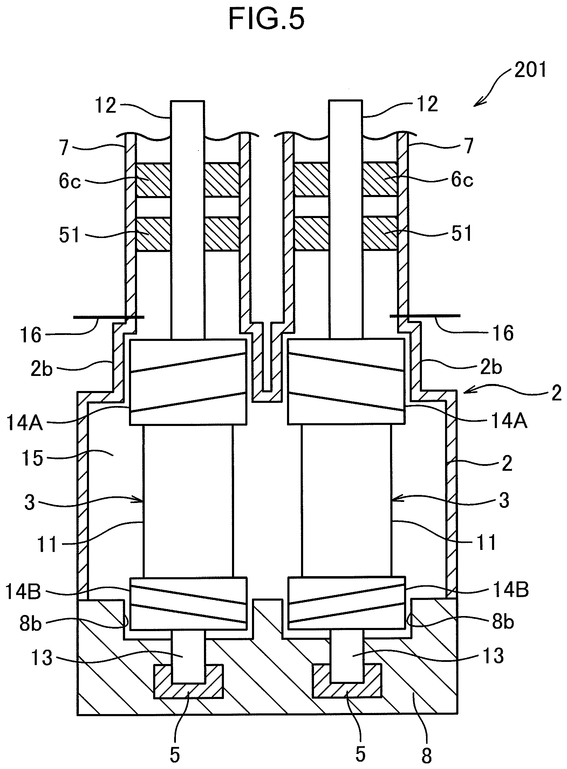

FIG. 5 shows a kneader 201 according to a third embodiment of the present invention. In the kneader 201, there are respective first bearing units in a pair of bearing support parts 7, wherein each of the first bearing units includes only a non-lubrication bearing 51, not including any lubrication bearing, for example, the lubrication bearing 4 shown in FIG. 3.

Similarly to the kneader 101 according to the second embodiment, the kneader 201 does not include the protection member 9 shown in FIG. 2 but includes only an annular third sealing member 6c as a sealing member. The third sealing member 6c is disposed on a side opposite to the chamber 2 across the non-lubrication bearing 51, that is, on a side closer to the motor than the non-lubrication bearing 51. The kneader 201 may include a plurality of third sealing members 6c aligned in the rotor axis direction between the non-lubrication bearing 51 and the motor. The third sealing member 6c may be disposed at a position closer to the chamber 2 than the non-lubrication bearing 51.

The first bearing unit of the kneader 201 may further include a non-lubrication bearing disposed between a supply-and-discharge port 15 and the non-lubrication bearing 51 or between the non-lubrication bearing 51 and the third sealing member 6c, in addition to the non-lubrication bearing 51. The increase in the number of bearings that support the shaft part of the rotor 3 enables the rotor 3 to be more effectively restrained from eccentricity, thereby allowing seizure and the like of the bearing due to the eccentricity to be more effectively reduced.

The embodiments of the present invention having been described merely show specific examples, with no intention to particularly limit the present invention, allowing specific configurations and the like to be appropriately changed in design. Besides, the actions and effects described about the embodiments of the present invention are merely ones listed as the most suitable actions and effects generated by the present invention, and the actions and effects of the present invention are not limited to those described in the embodiments of the present invention.

For example, respective configurations of the first and second bearing units and the sealing member provided for the pair of rotors 3 shown in FIGS. 2 to 5, respectively, may be either the same or different from each other. For example, in the case of the motor connected to only one of the pair of rotors 3, it is also allowable that the first bearing unit that supports the first rotor shaft 12 to which the motor is connected includes only the lubrication bearing 4 whereas the first bearing unit that supports the first rotor shaft 12 to which the motor is not connected includes only a non-lubrication bearing.

In the case where the first bearing unit is constituted by a non-lubrication bearing, for example, the non-lubrication bearing 51 shown in FIG. 4, the second bearing unit may include a lubrication bearing. In this case, it is preferable to dispose a sealing member between the lubrication bearing included in the second bearing unit and the chamber 2.

The present invention is not limited to a kneader including the pair of rotors 3 but also allowed to be adopted to a kneader including only a single rotor.

As has been described, there is provided a kneader capable of inhibiting physical properties of a kneaded product from being deteriorated and having high sealing performance for a shaft part of a rotor. The kneader performs kneading of a material in presence of a working fluid in a supercritical state or a subcritical state. The kneader includes a chamber, a rotor, a first bearing unit, a second bearing unit, and a sealing member. The chamber defines a kneading space in which kneading of the material is performed. The rotor includes a first rotor shaft part, a rotor body, and a second rotor shaft part, which are arranged in a rotor axis direction. The first rotor shaft part is one end part in the rotor axis direction to be connected to a motor. The second rotor shaft part is the other end part in the rotor axis direction. The rotor body is located between the first rotor shaft part and the second rotor shaft part and rotated in the kneading space to thereby perform the kneading. The first bearing unit rotatably supports the first rotor shaft. The second bearing unit rotatably supports the second rotor shaft. The sealing member is disposed so as to prevent the working fluid from leaking from the chamber toward the motor, at a position closer to the motor than the chamber. At least one of the first bearing unit and the second bearing unit is constituted by a non-lubrication bearing containing no lubricating oil. The kneader can inhibit physical properties of a kneaded product from being deteriorated, with high sealing performance.

In the kneader, each of the first bearing unit and the second bearing unit may include the non-lubrication bearing. This makes it possible to more reliably inhibit a lubricating oil from deteriorating the physical properties of the material.

The chamber may include a chamber body having an opening that allows the kneading space to be opened through the opening at an end part on a side closer to the second rotor shaft out of opposite end parts in the rotor axis direction, and a lid member to be attached to the chamber body so as to close the opening. In this case, it is preferable that the second bearing unit is constituted by the non-lubrication bearing and the non-lubrication bearing is fixed to the lid member. This makes it possible to inhibit the physical properties of the kneaded material in the kneading space from being deteriorated by a lubricating oil while keeping the kneading space with high airtight.

The first bearing unit may include a lubrication bearing lubricated by a lubricating oil. In this case, the sealing member, which is disposed so as to prevent fluid from leakage from the lubrication bearing to the chamber at a position between the lubrication bearing and the chamber, enables a lubricating oil to be restrained from leaking from the lubrication bearing into the kneading space in the chamber by use of the sealing member, in spite of the use of the lubrication bearing.

Alternatively, it is also allowable that the first bearing unit includes the non-lubrication bearing, which is disposed between the sealing member and the chamber. The disposition of the non-lubrication bearing allows the distance between the non-lubrication bearing and the second bearing unit to be small to restrain the rotor from eccentricity while inhibiting the physical properties of the kneaded material from being deteriorated by the lubricating oil.

## Claims

1. A kneader that performs kneading of a material in presence of a working fluid in a supercritical or subcritical state, the kneader comprising:
a chamber defining a kneading space in which the kneading of the material is performed;
a rotor including a first rotor shaft part, a rotor body, and a second rotor shaft part, which are arranged in a rotor axis direction, the first rotor shaft part being one end part in the rotor axis direction to be connected to a motor, the second rotor shaft part being the other end part in the rotor axis direction, the rotor body located between the first rotor shaft part and the second rotor shaft part and rotated in the kneading space to thereby perform the kneading;
a first bearing unit that rotatably supports the first rotor shaft part;
a second bearing unit that rotatably supports the second rotor shaft part;
a sealing member disposed so as to prevent the working fluid from leaking from the chamber toward the motor at a position closer to the motor than the chamber, wherein
at least one of the first bearing unit and the second bearing unit is constituted by a non-lubrication bearing containing no lubricating oil.

2. The kneader according to claim 1, wherein each of the first bearing unit and the second bearing unit includes the non-lubrication bearing.

3. The kneader according to claim 1, wherein the chamber includes a chamber body having an opening that allows the kneading space to be opened through the opening at an end part on a side closer to the second rotor shaft out of opposite end parts in the rotor axis direction, and a lid member to be attached to the chamber body so as to close the opening, the second bearing unit being constituted by the non-lubrication bearing, which is fixed to the lid member.

4. The kneader according to claim 1, wherein the first bearing unit includes a lubrication bearing lubricated by a lubricating oil, and the sealing member is disposed so as to prevent fluid from leaking from the lubrication bearing to the chamber at a position between the lubrication bearing and the chamber.

5. The kneader according to claim 1, wherein the first bearing unit includes the non-lubrication bearing, which is disposed between the sealing member and the chamber.
